# EUROPEAN PATENT APPLICATION

(11) **EP 3 511 264 A1**
(43) Date of publication of application: **17.07.2019**
(21) Application number: 17847878.0
(22) Date of filing: 13.01.2017
(51) Int. Cl.: B65D 81/36, G02B 27/02

(54) **MOBILE PHONE PACKAGING BOX**

(30) Priority: 12.09.2016 CN 201621053932 U
(71) Applicant: ZTE Corporation, Shenzhen, Guangdong 518057 (CN)
(72) Inventor: PENG, Chen, Shenzhen Guangdong 518057 (CN)
(74) Representative: Petit, Maxime
(86) International application number: PCT/CN2017/071137
(87) International publication number: WO 2018/045702

(57) **Abstract**

Provided is a mobile phone packaging box, comprising: a first packaging box cover (1), a second packaging box cover (2), a mobile phone tray (3) for clamping and fixing a mobile phone and an organic lens (4), wherein a first hole for eye observation and a second hole for avoiding the nose are provided in the first packaging box cover (1) or the second packaging box cover (2). The organic lens (4) are fixed in a position corresponding to the first hole at the first packaging box cover (1) or the second packaging box cover (2) with the first hole. The mobile phone packaging box is not only of low cost, but also has high experience, and can be used repeatedly.

## Description

### FIELD OF THE INVENTION

The Utility Model relates to the field of communication, and in particular to a mobile phone packaging box.

### BACKGROUND

In the related art, Virtual Reality (VR) glasses are stand-alone equipment, which may be provided in a head-mounted or a simple paper-folding assembled form.

In the related art, VR glasses mainly focus on experience. In the case of high cost of purchasing the independent equipment, however, it would be waste if the experiencing effect is not good. The simple VR paper-folding glasses with undesirable strength and effect can only be used as a temporary solution.

Therefore, in the related art, VR glasses have the problem of high equipment cost or low experience.

### SUMMARY

The embodiment of the present Utility Model provides a mobile phone packaging box to solve at least the problem that the VR glasses have high equipment cost or low experience in the related art.

According to an embodiment of the present Utility Model, there is provided a mobile phone packaging box, wherein the mobile phone packaging box is an upper-lower-capped mobile phone packaging box, comprising: a first packaging box cover 1, a second packaging box cover 2, a mobile phone tray 3 for clamping and fixing a mobile phone and an organic lens 4, wherein a first hole for eye observation and a second hole for avoiding a nose are provided in the first packaging box cover 1 or the second packaging box cover 2; the organic lens 4 is fixed at a position corresponding to the first hole in the first packaging box cover 1 or the second packaging box cover 2 provided with the first hole.

Preferably, the mobile phone packaging box further includes: a mobile phone positioning card 5 configured to fix the mobile phone between the first packaging box cover 1 or the second packaging box cover 2 provided with the first hole and the mobile phone tray 3.

Preferably, the mobile phone positioning card 5 is a piece of cardboard.

Preferably, a pair of first holes are centrally provided in a bottom of the first packaging box cover 1, the second hole is located at an intersection of the bottom and the side of the first packaging box cover 1, and the pair of first holes and the second hole form an inverted triangular shape of the human eyes and the nose; or a pair of first holes are centrally provided in a bottom of the second packaging box cover 2, the second hole is located at an intersection of the bottom and the side of the second packaging box cover 2, and the pair of first holes and the second hole form an inverted triangular shape of the human eyes and the nose.

Preferably, the organic lens 4 is in a dumbbell shape, an intermediate connecting portion of which bonds the organic lens 4 to the bottom of the first packaging box cover 1 or the second packaging box cover 2 provided with the first hole by dispensing adhesives.

Preferably, the organic lens 4 is convex lens.

Preferably, a sticker 6 having the same shape as the first hole and the second hole of the first packaging box cover 1 or the second packaging box cover 2 provided with the first hole is mounted on the organic lens 4.

Preferably, an unfolded left-right plate 7 is mounted on the sticker 6, wherein a middle portion of the left-right plate 7 is connected to the sticker 6, such that during the use of the organic lens 4, two sides of the left-right plate 7 are folded over to form an upright plate in the middle of the first packaging box cover 1 or the second packaging box cover 2 by connecting inserts on the two sides of the left-right plate7.

Preferably, the materials of the upper-lower-capped mobile phone packaging box include at least one of cardboard, plastic, rubber, and pulp molded products.

Preferably, the mobile phone packaging box further includes: a packaging envelope 8 configured to encapsulate the assembly formed by the first packaging box cover 1 and the second packaging box cover 2.

Through the Utility Model, the organic lens 4 is simply mounted to the upper-lower-capped mobile phone packaging box, and the first hole for the eye observation and the second hole for avoiding the nose are formed on the second packaging box cover 2 (or the first packaging box cover 1) such that the structure can be converted into a VR glasses equipment by simple assembly and directly experienced as a mobile phone's enhanced function. The whole equipment has a simple structure, and the added accessories of the VR glasses cannot increase a volume of the packaging with easy assembly and disassembly. The assembled VR glasses equipment has a firm structure and enhanced experience, and can be used repeatedly.

### BRIEF DESCRIPTION OF THE DRAWINGS

The illustrative accompanying drawings herein are provided to further understand the Utility Model and constitute a part of the disclosure. The schematic embodiments of the Utility Model and the description thereof are intended to explain the present Utility Model and will not constitute an inappropriate limitation to the present Utility Model. In drawings:
FIG. 1 is a schematic diagram of a mobile phone packaging box according to an embodiment of the Utility Model;
FIG. 2 is an exploded diagram of a general upper-lower-capped mobile phone packaging box according to an embodiment of the Utility Model;
FIG. 3 is an exploded diagram of a mobile phone package box with additional VR glasses accessories according to an embodiment of the Utility Model;
FIG. 4 is a structural diagram of a VR visual observation hole and a nose avoidance hole according to an embodiment of the Utility Model;
FIG. 5 is a structural diagram of a 3D organic lens of the VR glasses accessories according to an embodiment of the Utility Model;
FIG. 6 is an assembled diagram of a 3D organic lens and a second packaging box cover 2 according to an embodiment of the Utility Model;
FIG. 7 is an assembled perspective diagram of the 3D organic lens and a second packaging box cover 2 according to the Utility Model;
FIG. 8 is a structural diagram of VR glasses accessories - mobile phone positioning card according to an embodiment of the Utility Model;
FIG. 9 is an assembly diagram of a VR glasses equipment according to an embodiment of the Utility Model;
FIG. 10 is a cross-sectional diagram of the assembled VR glasses equipment according to an embodiment of the Utility Model;
FIG. 11 is a schematic diagram of a packaging envelope with the function of VR glasses according to an embodiment of the Utility Model.

### DETAILED DESCRIPTION OF THE EMBODIMENTS

Hereinafter, the Utility Model will be described in detail with reference to the accompanying drawings in conjunction with the embodiments. It should be noted that, the embodiments and the features in the embodiments in the present disclosure can be combined with each other without conflict.

It should be noted that the terms "first", "second", and the like in the specification and claims of the present Utility Model and the above drawings are used to distinguish similar objects, and are not necessarily intended to describe a specific order or prioritization.

Based on the above problems of the related art, the embodiments of the present Utility Model provide a design of a mobile phone packaging box carrying VR glasses in accordance with the following characteristics of the packaging box. The packaging box is an essential material for mobile phone sale. If the packaging box with a function of packaging can be changed into VR glasses equipment by adding some accessories and simply assembling. As such, one thing can be used in two ways, which increases the experience and saves costs. In addition, this kind of packaging box carrying the function of VR glasses reflects a concept of green environmental protection which saves resources and facilitates recycling.

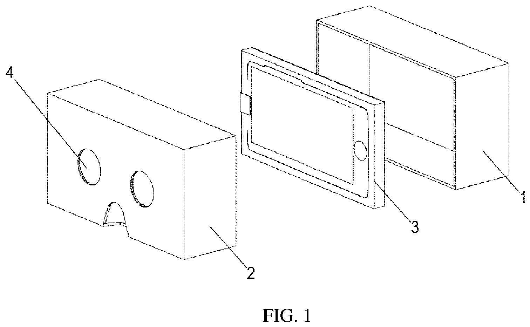

FIG. 1 is a schematic diagram of a mobile phone packaging box according to an embodiment of the Utility Model. As show in FIG. 1, the mobile phone packaging box can be an upper-lower-capped mobile phone packaging box, including: a first packaging box cover 1, a second packaging box cover 2, a mobile phone tray 3 for clamping and fixing a mobile phone and an organic lens 4 for Virtual Reality VR, wherein a first hole for eye observation and a second hole for avoiding a nose are provided in the first packaging box cover or the second packaging box cover. The organic lens 4 is fixed at a position corresponding to the first hole in the first packaging box cover 1 or the second packaging box cover 2 provided with the first hole.

Through above structure, the organic lens 4 is simply mounted to the upper-lower-capped mobile phone packaging box, and the first hole for the eye observation and the second hole for avoiding the nose are formed on the second packaging box cover 2 (or the first packaging box cover 1) such that the structure can be converted into a VR glasses equipment by simple assembly and directly experienced as a mobile phone's enhanced function. The whole equipment has a simple structure, and the added accessories of the VR glasses cannot increase a volume of the packaging with easy assembly and disassembly. The assembled VR glasses equipment has a firm structure and enhanced experience, and can be used repeatedly.

The packaging box with VR glasses function according to the embodiment of the present Utility Model will be described below in conjunction with the overall packaging of the mobile phone.

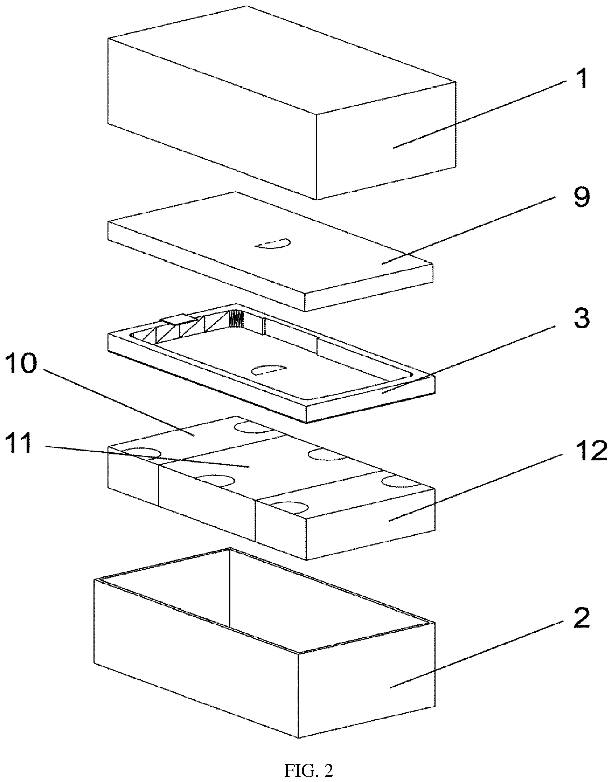

FIG. 2 is an exploded diagram of a general upper-lower-capped mobile phone packaging box according to an embodiment of the Utility Model, as shown in FIG. 2, including a first packaging box cover 1, a manual box 9, a mobile phone tray 3, a charger box 10, a data cable box 11, a headphone box 12 and a second packaging box cover 2. The mobile phone packaging box is formed by assembling in an upper-lower order in the figure, wherein the first packaging box cover 1 and the manual box 2 are of a cardboard box structure.

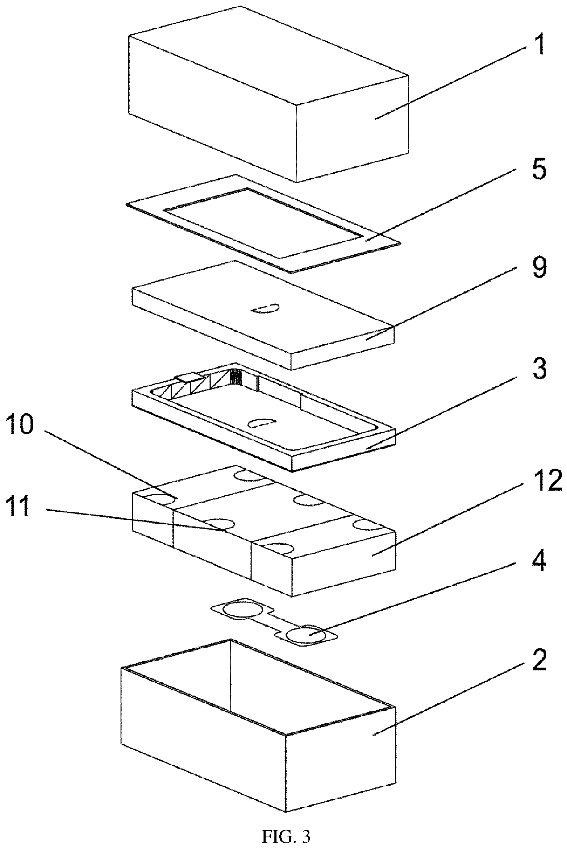

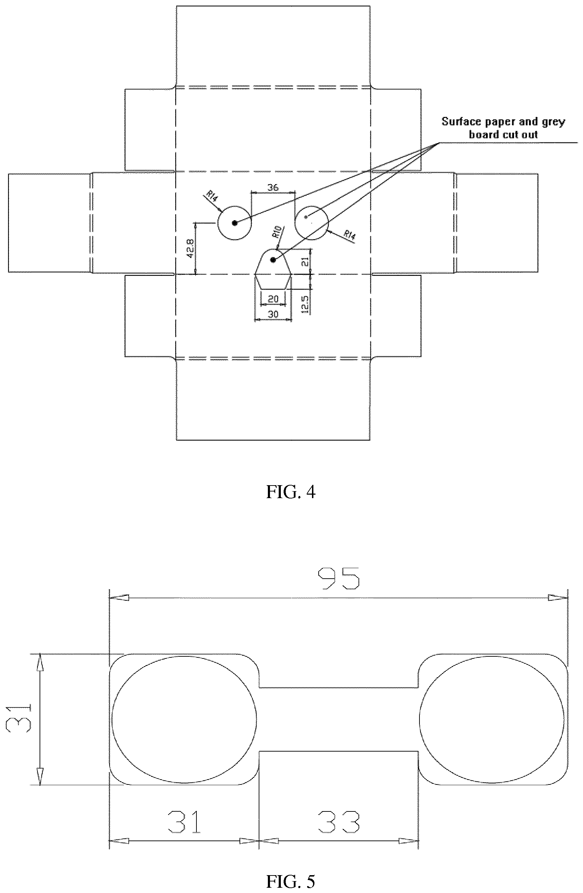

Based on the above upper-lower-capped mobile phone packaging box with the VR glasses accessories, FIG. 3 is an exploded diagram of a mobile phone package box with the additional VR glasses accessories according to an embodiment of the Utility Model, as shown in FIG. 3, including a first packaging box cover 1, a manual box 9, a mobile phone tray 3, a charger box 10, a data cable box 11, a headphone box 12 and a second packaging box cover 2. A mobile phone positioning card 5 and an organic lens 4 are the additional VR glasses accessories. Further, a pair of eye observation holes (i.e., the above first hole) and a nose avoidance hole (i.e., the above second hole) are formed in the second packaging box cover (see FIGS. 4, 5 and 6). The additional VR glasses accessories, eye observation holes and nose avoidance hole are prepared for the assembly of VR glasses equipment.

Preferably, a pair of first holes are centrally provided in a bottom of the first packaging box cover 1, the second hole is located at an intersection of the bottom and the side of the first packaging box cover 1, and the pair of first holes and the second hole form an inverted triangular shape of the human eyes and the nose; alternatively, a pair of first holes are centrally provided in a bottom of the second packaging box cover 2, the second hole is located at an intersection of the bottom and the side of the second packaging box cover 2, and the pair of first holes and the second hole form an inverted triangular shape of the human eyes and the nose. FIG. 4 is a structural diagram of a VR visual observation hole and a nose avoidance hole according to an embodiment of the Utility Model. As shown in FIG. 4, a pair of circular eye observation holes are centrally provided in a bottom of the second packaging box cover 2, and the cardboard is completely hollowed out. A nose-shaped nose avoidance hole is disposed at an intersection of the bottom and the side of the second packaging box cover 2, and the cardboard is completely hollowed out.

Herein, the organic lens 4 may be a lens with a thick middle and thin edge (for example, a convex lens). The organic lens 4 may be in a dumbbell shape, an intermediate connecting portion of which bonds the organic lens 4 to the bottom of the first packaging box cover 1 or the second packaging box cover 2 provided with the first hole by dispensing adhesives. FIG. 5 is a structural diagram of a 3D organic lens of the VR glasses accessories according to an embodiment of the Utility Model. As shown in FIG. 5, there is a 3D organic lens in the VR glasses accessory, which, for example, can be in a dumbbell shape, and the glass lens has a structure with a thick middle and thin edge.

In order to further improve stability, a sticker 6 having the same shape as the first hole and the second hole of the first packaging box cover 1 or the second packaging box cover 2 provided with the first hole may be mounted on the organic lens 4.

Preferably, in order to ensure the effect of left-right split screen, a foldable plate that is erected in the middle of the packaging may be provided. The unfolded left-right plate 7 is mounted on the sticker 6, wherein a middle portion of the left-right plate 7 is connected to the sticker 6, such that during the use of the organic lens 4, two sides of the left-right plate 7 are folded over to form an upright plate in the middle of the first packaging box cover 1 or the second packaging box cover 2 by connecting inserts on the two sides of the left-right plate 7.

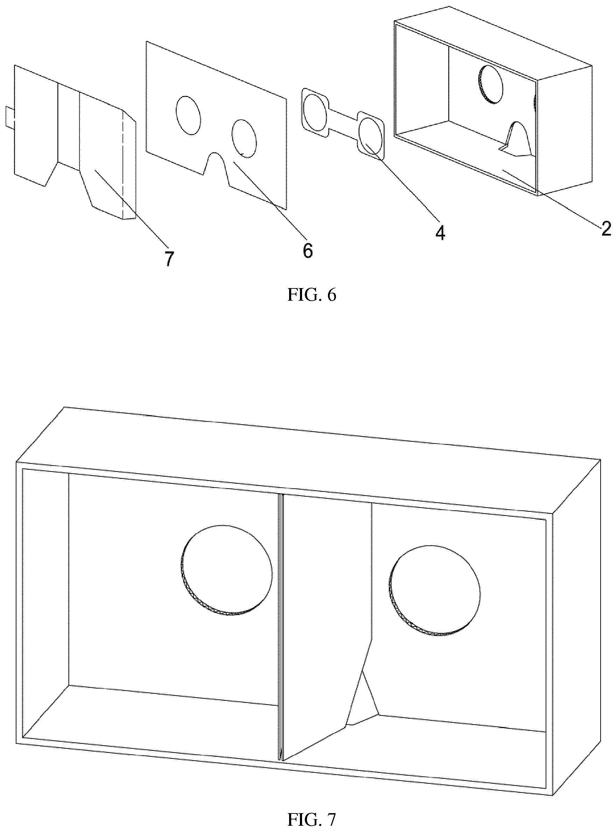

FIG. 6 is an assembled diagram of a 3D organic lens and a second packaging box cover 2 according to an embodiment of the Utility Model. As shown in FIG. 6, the 3D organic lens is bonded to the bottom of an inner side of the second packaging box cover 2 by dispensing adhesives wherein the two lenses with the thick middle and thin edges at ends correspond to the circular holes of the second packaging box cover 2 and the middle portion thereof and the bottom of second packaging box cover 2 are applied with the adhesives. The sticker 6 having the same shape as the holes on the second packaging box cover 2 is mounted. The left-right plate 7 is mounted on the sticker 6. Only the middle portion of left-right plate 7 is connected to the sticker 6 while the two sides thereof can be folded over when used as a VR equipment to form the upright plate in the middle of the second packaging box cover 2 by connecting the inserts, as shown in FIG. 7. FIG. 7 is an assembled perspective diagram of the 3D organic lens and a second packaging box cover 2 according to the Utility Model.

In order to position the mobile phone well, the mobile phone packaging box can also provide a design of a mobile phone positioning card 5 configured to fix the mobile phone between the first packaging box cover 1 or the second packaging box cover 2 provided with the first hole and the mobile phone tray 3. Preferably, the mobile phone positioning card 5 can be a piece of cardboard.

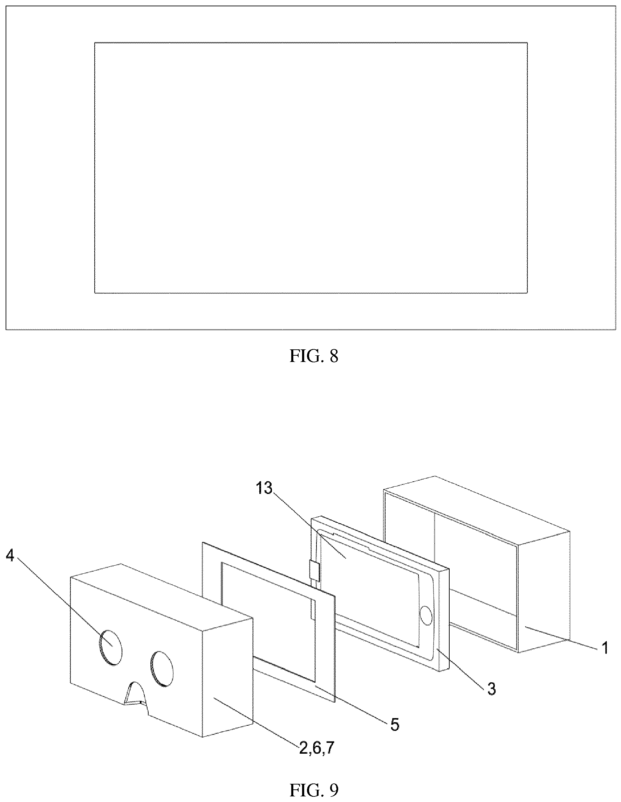

FIG. 8 is a structural diagram of VR glasses accessories - mobile phone positioning card according to an embodiment of the Utility Model, As shown in FIG. 8, the mobile phone positioning card 5 is a piece of cardboard having the same size as the first packaging box cover 1 and forming a cut-out area corresponding to a size of screen of the mobile phone in the middle. This cardboard is used to fix the mobile phone to play a positioning role in the use of VR glasses.

FIG. 9 is an assembly diagram of VR glasses equipment according to an embodiment of the Utility Model. As shown in FIG. 9, when the packaging function of the mobile phone box is completed, it can be assembled into the VR glasses equipment. The required accessories include: the first packaging box cover 1, the mobile phone tray 3, the mobile phone positioning card 5, the second packaging box cover 2, the organic lens 4 and the mobile phone 13. At this time, the second packaging box cover 2 and the organic lens 4 have been assembled, and the mobile phone 13 needs to be placed in the mobile phone tray 3. It should be noted that the first packaging box cover 1 and the second packaging box cover 2 are movable with contact. In the process of using the VR glasses equipment, the first packaging box cover 1 and the second packaging box cover 2can be moved relative to each other to realize a focusing operation of the human eye on the VR glasses equipment.

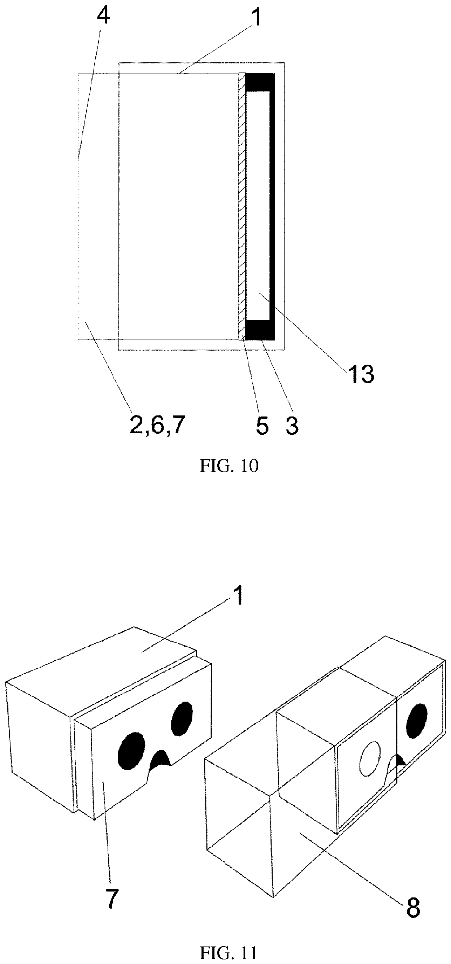

FIG. 10 is a cross-sectional diagram of the assembled VR glasses equipment according to an embodiment of the Utility Model. As shown in FIG. 10, when the VR glasses equipment is assembled in the order of FIG.9, all the accessories are pressed together to form a usable VR glasses. At this time, the mobile phone tray 3 carrying the mobile phone 13 is placed in the first packaging box cover 1. The mobile phone positioning card board 5 is pressed against the mobile phone 13 with the screen of the mobile phone exposed. The second packaging box cover 2 with the organic lens 4 is pressed on the mobile phone positioning card 5 to form the complete VR glasses equipment.

Preferably, in order to ensure the integrity of packaging (the bottom cover with the hole cannot be exposed to the outermost part of the packaging), a packaging envelope 8 configured to pack the assembly formed by the first packaging box cover 1 and the second packaging box cover 2. FIG. 11 is a schematic diagram of a packaging envelope with the function of VR glasses according to an embodiment of the Utility Model. As shown in FIG. 11, the packaging envelope 8 is additionally provided. The first packaging box cover 1 and the second packaging box cover 2 are assembled and then inserted to the packaging envelope 8 to form the complete packaging box with the function of VR glasses.

It should be noted that the materials of the upper-lower capped mobile phone packaging box include at least one of the cardboard, injection-molded plastic, molded pulp. In other words, the main body of the packaging may include other materials (for example, cardboard, plastic, rubber, pulp molded products) or other structures in addition to the upper-lower capped packaging box of the cardboard. In other words, the upper-lower-capped structure can be made by folded papers, or by injection molding, pulp molding or other manufacturing processes. In conclusion, the structure which can be transformed into a VR glasses equipment by the combination of changes in the upper and lower covers of packaging (the eye observation hole and the nose avoidance hole can be placed on the lower cover or upper cover) with some necessary accessories is considered as falling within the scope of this disclosure.

The above-mentioned upper-lower-capped packaging box (for example, cardboard) has all the functions of the mobile phone packaging box. On this basis, accessories such as lenses and mobile phone positioning cards are additionally provided and eye observation holes is cut out in the second packaging box cover 7 (or the first packaging box cover 1) for attaching the lenses. It can be transformed into the VR glasses equipment by simple assembly and directly experienced as the enhanced function of mobile phone. The whole equipment has a simple structure, and the added accessories of the VR glasses cannot increase a volume of the packaging with easy assembly and disassembly. The assembled VR glasses equipment has a firm structure and enhanced experience, and can be used repeatedly.

It will be apparent to those skilled in the art that the various modules or steps of the present Utility Model described above can be implemented by a general-purpose computing device. They can be centralized on a single computing device or distributed on a network of multiple computing devices. Optionally, they can be implemented by program code executable by the computing devices so that they can be stored in a storage device and executed by the computing equipment. In some cases, the steps shown or described may be performed in an order different than that herein, or they may be separately fabricated into individual integrated circuit modules, or some of steps or modules may be completed by individual integrated circuit modules. In this way, the Utility Model is not limited to any particular combination of hardware and software.

The above is only the preferred embodiments of the present Utility Model and is not intended to limit the present Utility Model. For those skilled in the art, the present Utility Model may have various modifications and changes. Any modifications, equivalent substitutions, and improvements made within the spirit and principles of the present Utility Model will fall into the scope of the present Utility Model.

Through the above embodiments and preferred examples, the organic lens 4 is simply mounted to the upper-lower-capped mobile phone packaging box, and the first hole for the eye observation and the second hole for avoiding the nose are formed on the second packaging box cover 2 (or the first packaging box cover 1) such that the structure can be converted into a VR glasses equipment by simple assembly and directly experienced as a mobile phone's enhanced function. The whole equipment has a simple structure, and the added accessories of the VR glasses cannot increase a volume of the packaging with easy assembly and disassembly. The assembled VR glasses equipment has a firm structure and enhanced experience, and can be used repeatedly.

## Claims

1. A mobile phone packaging box, wherein the mobile phone packaging box is an upper-lower-capped mobile phone packaging box, comprising: a first packaging box cover (1), a second packaging box cover (2), a mobile phone tray (3) for clamping and fixing a mobile phone and an organic lens (4), wherein
a first hole for eye observation and a second hole for avoiding a nose are provided in the first packaging box cover (1) or the second packaging box cover (2);
the organic lens (4) is fixed at a position corresponding to the first hole in the first packaging box cover (1) or the second packaging box cover (2) provided with the first hole.

2. The mobile phone packaging box according to claim 1, further comprising: a mobile phone positioning card (5) configured to fix the mobile phone between the first packaging box cover (1) or the second packaging box cover (2) provided with the first hole and the mobile phone tray (3).

3. The mobile phone packaging box according to claim 2, wherein the mobile phone positioning card (5) is a piece of cardboard.

4. The mobile phone packaging box according to claim 1, wherein
a pair of first holes are centrally provided in a bottom of the first packaging box cover (1), the second hole is located at an intersection of the bottom and the side of the first packaging box cover (1), and the pair of first holes and the second hole form an inverted triangular shape of the human eyes and the nose; or
a pair of first holes are centrally provided in a bottom of the second packaging box cover (2), the second hole is located at an intersection of the bottom and the side of the second packaging box cover (2), and the pair of first holes and the second hole form an inverted triangular shape of the human eyes and the nose.

5. The mobile phone packaging box according to claim 4, wherein the organic lens (4) is in a dumbbell shape, an intermediate connecting portion of which bonds the organic lens (4) to the bottom of the first packaging box cover (1) or the second packaging box cover (2) provided with the first hole by dispensing adhesives.

6. The mobile phone packaging box according to claim 1, wherein the organic lens (4) is convex lens.

7. The mobile phone packaging box according to claim 6, wherein a sticker (6) having the same shape as the first hole and the second hole of the first packaging box cover (1) or the second packaging box cover (2) provided with the first hole is mounted on the organic lens (4).

8. The mobile phone packaging box according to claim 7, wherein an unfolded left-right plate (7) is mounted on the sticker (6), wherein a middle portion of the left-right plate (7) is connected to the sticker (6), such that during the use of the organic lens (4), two sides of the left-right plate (7) are folded over to form an upright plate in the middle of the first packaging box cover (1) or the second packaging box cover (2) by connecting inserts on the two sides of the left-right plate (7).

9. The mobile phone packaging box according to claim 1, wherein the materials of the upper-lower-capped mobile phone packaging box include at least one of cardboard, plastic, rubber, and pulp molded products.

10. The mobile phone packaging box according to any one of claims 1-9, further comprising: a packaging envelope (8) configured to encapsulate the assembly formed by the first packaging box cover (1) and the second packaging box cover (2).
